# EUROPEAN PATENT SPECIFICATION

(11) **EP 4 219 405 B1**
(45) Date of publication and mention of the grant of the patent: **31.12.2025**
(21) Application number: 21880521.6
(22) Date of filing: 14.10.2021
(51) Int. Cl.: C01G 53/00, H01M 4/525, H01M 4/505

(54) **METHOD FOR MANUFACTURING HIGH-NICKEL POSITIVE ELECTRODE ACTIVE MATERIAL**
VERFAHREN ZUR HERSTELLUNG EINES POSITIVELEKTRODENAKTIVMATERIALS MIT HOHEM NICKELGEHALT
PROCÉDÉ DE FABRICATION D'UN MATÉRIAU ACTIF D'ÉLECTRODE POSITIVE À HAUTE TENEUR EN NICKEL

(30) Priority: 14.10.2020 KR 20200132451; 13.10.2021 KR 20210136143
(43) Date of publication of application: 02.08.2023
(73) Proprietor: LG Energy Solution, Ltd., Seoul 07335 (KR)
(72) Inventor: KWON, Jiyoon, Daejeon 34122 (KR); JUNG, Kyung Hwan, Daejeon 34122 (KR); HAN, Dong Hoon, Daejeon 34122 (KR); PARK, Sungwoo, Daejeon 34122 (KR); NAM, Sung Gwang, Daejeon 34122 (KR); YOO, Su Bin, Daejeon 34122 (KR); KIM, Dong Myung, Daejeon 34122 (KR)
(74) Representative: Hoffmann Eitle
(86) International application number: PCT/KR2021/014168
(87) International publication number: WO 2022/080874

(56) References cited:
- WO-A1-2020/019920
- AU-B2- 699 127
- CN-A- 101 768 665
- KR-A- 20150 075 200
- KR-A- 20180 080 992
- KR-B1- 101 191 042
- KR-B1- 101 372 622
- US-B2- 6 379 636
- AYSE UCYILDIZ, ISMAIL GIRGIN: "High pressure sulphuric acid leaching of lateritic nickel ore", PHYSICOCHEM. PROBL. MINER. PROCESS., vol. 53, no. 1, 1 January 2017 (2017-01-01), pages 475 - 488, XP055681170, ISSN: 1643-1049, DOI: 10.5277/ppmp170137

## Description

### [Technical Field]

The present invention relates to a method for manufacturing a high-nickel positive electrode active material having a nickel content of 60 at% or more. More particularly, the present invention relates to a method for manufacturing a high-nickel positive electrode active material, which can reduce time and cost by leaching a metal component from a raw material containing nickel and cobalt, and then directly injecting the leached metal component into the manufacturing process of a precursor of a positive electrode active material, to simplify the smelting and liquefaction process.

### [Background Art]

Recently, as mobile devices and power tools are popularized and the demand for eco-friendly electric vehicles is increased, the conditions that an energy source for driving them must have are gradually increasing. In particular, there is a demand for the development of a positive electrode active material having high energy density, stable operation under high voltage, and long lifetime characteristics.

As a positive electrode active material for a lithium secondary battery, lithium transition metal composite oxide is used, and among them, lithium cobalt composite metal oxide of LiCoO₂ with high operating voltage and excellent capacity characteristics is mainly used. However, since LiCoO₂ has very poor thermal properties due to destabilization of the crystal structure by de-lithiation, and also is expensive, there is a limit to its mass use as a power source in fields such as electric vehicles.

As a material to replace LiCoO₂, lithium manganese composite metal oxide (LiMnO₂ or LiMn₂O₄, etc.), lithium iron phosphate compound (LiFePO₄, etc.) or lithium nickel composite metal oxide (LiNiO₂, etc.) have been developed. However, there is a problem that LiNiO₂ has poor thermal stability compared to LiCoO₂, and if an internal short circuit occurs due to external pressure, etc. in the state of charge, the positive electrode active material itself is decomposed, thereby resulting in rupture and ignition of the battery.

Accordingly, as a method to improve low thermal stability while maintaining the excellent reversible capacity of LiNiO₂, nickel cobalt manganese-based lithium composite transition metal oxide (hereinafter, simply referred to as 'NCM-based lithium oxide') manufactured by substituting a part of Ni with Mn and Co has been developed. However, the conventional NCM-based lithium oxide developed to date has insufficient capacity characteristics, so there is a limit to its application.

In order to improve these problems, recently, research on improving the capacity characteristics of a positive electrode active material by increasing the Ni content in NCM-based lithium oxide has been conducted. Recently, a high-nickel positive electrode active material containing Ni in an amount of 60 atm % or more in the total transition metal has been developed.

Nickel metal used for the NCM-based positive electrode active material can be obtained by performing an additional smelting process on nickel sulfate, which is an intermediate product in the process of smelting iron, and reducing it. On the other hand, in order to prepare a precursor of the positive electrode active material, it is necessary to prepare nickel sulfate again from nickel metal, or to dissolve an intermediate (NiSiO₄ ·6H₂O) made into powder for the convenience of transport and storage.

That is, in order to prepare a precursor of the current positive electrode active material, since nickel metal must be obtained from nickel oxide ore or sulfide ore and then converted into nickel sulfate again, time and cost are excessively required. In particular, in the case of a high-nickel positive electrode active material, since a high nickel content is required, time and cost are significantly increased.

Therefore, there is a demand for the development of a new technology that can further simplify the manufacturing process of the high-nickel positive electrode active material.

Patent document 2 describes a method for preparing a ternary cathode material from a laterite nickel ore nitric acid leaching solution, comprising: adjusting pH of a laterite nickel ore nitric acid leaching solution to obtain an iron and aluminum slag and a filtrate, adding fluoride salt to the filtrate to deeply remove calcium and magnesium to obtain a calcium-magnesium slag and a nickel, cobalt, and manganese-rich solution, adjusting pH of the nickel, cobalt, and manganese-rich solution again, precipitating nickel, cobalt, and manganese to obtain one nickel, cobalt, and manganese slag and a nickel, cobalt, and manganese-poor solution, adjusting the pH of the nickel, cobalt, and manganese-poor solution, deeply precipitating nickel, cobalt, and manganese, returning the obtained second nickel, cobalt, and manganese slag for adjusting the pH of the laterite nickel ore nitric acid leaching solution, and preparing a precursor of the ternary cathode material from the one nickel, cobalt, and manganese slag; adding the precursor, a lithium source, an additive agent, and water to a high pressure reactor by the amount, performing a hydrothermal reaction, directly drying, grinding, and high temperature calcination to obtain the nickel, cobalt, manganese, and lithium ternary cathode material.

Patent document 3 describes a process for the leaching of both the "limonite" (Fe approx. ≥25% and Mg approx. ≤6%) and "saprolite" (Fe approx. <20% and Mg approx. ≥10%) fractions of typical nickel and cobalt bearing laterite ore. The low magnesium fraction of the laterite ore is leached with sulfuric acid at high pressure and temperature to solubilize the metal values while precipitating most of the solubilized iron as hematite or other iron compounds and a portion of the dissolved aluminum as alunite or other aluminum compounds. After reducing the pressure of the leach slurry to approximately atmospheric pressure, the pregnant leach slurry or solution is contacted with the high magnesium fraction of the ore to solubilize most of the nickel contained in the high-magnesium ore fraction while dissolving only a small portion of the iron content of the high magnesium ore fraction. Further neutralization of the leach slurry in the presence of an alkali metal or ammonium ion allows the precipitation of iron-bearing jarosite at ambient pressure.

Patent document 4 describes a process for selectively recovering nickel by ion exchange absorption from a Ni/Co sulfuric acid feed solution obtained from limonite ore which is pressure leached with sulfuric acid and then neutralized and solid/liquid separated, containing nickel in the range of about 0.5 to 40 g/l and cobalt in the range of about 0.01 to 2 g/l as sulfates. The process comprises contacting the acid solution at a pH ranging from about 0.3 to 6 with a bed of protonated ion exchange resin in which protons thereof are exchangeable with nickel ions in said solution during ion exchange. The nickel is selectively extracted in preference to cobalt from the solution at a pH of less than about 2, thereby forming a raffinate containing the cobalt. The cobalt raffinate is neutralized, solid/liquid separated, and cobalt recovered therefrom. The absorbed nickel is stripped from said resin with sulfuric acid to form a nickel sulfate solution characterized by a nickel to cobalt ratio of at least about 50:1 suitable for the recovery of substantially pure nickel by electrolysis. Prior to electrolysis the nickel sulfate solution is neutralized and solid/liquid separated.

Patent document 5 describes a method for reducing acid consumption during heap leaching and high-pressure leaching of nickel laterite ore, which combines the heap leaching technology with the high-pressure leaching technology to reduce acid consumption during the treatment of nickel laterite ore; residual sulfuric acid in coarse particle immersion of limonite heap is sufficiently utilized and sodium sulfate is added during the stage of high-pressure leaching so that sulfuric acid is generated while yellow natrojarosite is formed, thereby further reducing the consumption of sulfuric acid during the stage of high-pressure leaching.

### [Patent document]

(Patent document 1) Korean Laid-open Patent Publication No. 10-2016-0063982 (publication date: June 7, 2016)
(Patent document 2) WO 2020/019920 A1
(Patent document 3) US 6 379 636 B2
(Patent document 4) AU 45153 96 A
(Patent document 5) CN 101 768 665 A

### [Disclosure]

### [Technical Problem]

The present invention aims to improve the preparation process of the high-nickel positive electrode active material, and is intended to provide a method for preparing the high-nickel positive electrode active material that can reduce time and cost, by leaching the metal component from the raw material containing nickel and cobalt, and then reducing the leached metal component without separating it, and directly putting it into the preparing process of the precursor of the positive electrode active material to simplify the smelting and liquefaction process.

In addition, the present invention is intended to provide a method for preparing a high-nickel positive electrode active material that can more easily obtain the positive electrode active material containing a high content of nickel of 60 atm % or more, by directly injecting a liquid intermediate containing nickel sulfate, cobalt sulfate and manganese sulfate obtained from a raw material containing nickel and cobalt into the preparation process of a precursor of the positive electrode active material, and additionally adding a certain amount of nickel sulfate, cobalt sulfate or manganese sulfate.

### [Technical Solution]

In order to achieve the above objects, the present invention provides a method for preparing a high-nickel positive electrode active material comprising the steps of preparing a raw material containing nickel and cobalt; separating a liquid intermediate by leaching a metal component in the raw material using an acid and removing impurities, wherein the step of leaching the metal component in the raw material using the acid is leaching with sulfuric acid under high temperature and pressure using an autoclave; co-precipitating a precursor of a positive electrode active material by adding a chelating agent and a hydroxide precipitant to the liquid intermediate; and mixing the positive electrode active material precursor with a lithium raw material and sintering to prepare a lithium composite metal oxide,
wherein the lithium composite metal oxide is represented by Formula 1 below:

   [Formula 1] LiₐNi_{b}Co_{c}Mn_{d}MₑO₂
wherein M is at least one selected from the group consisting of W, Cu, Fe, Ba, V, Cr, Ti, Zr, Zn, In, Ta, Y, In, La, Sr, Ga, Sc, Gd, Sm, Ca, Ce, Nb, Mg, B and Mo, and 0.9≤a≤1.5, 0.7≤b<1.0, 0<c<0.2, 0<d<0.2, and 0≤e≤0.02.

In addition, the present invention provides a method for preparing a high-nickel positive electrode active material, wherein the raw material containing nickel and cobalt is a nickel oxide ore or nickel sulfide ore.

In addition, the present invention provides a method for preparing a high-nickel positive electrode active material, wherein the liquid intermediate comprises nickel sulfate, cobalt sulfate and manganese sulfate.

In addition, the present invention provides a method for preparing a high-nickel positive electrode active material using a liquid intermediate having a nickel content of 35 wt.% to 65 wt.% and a cobalt content of 1.5 wt.% to 7 wt.%.

In addition, the present invention provides a method for preparing a high-nickel positive electrode active material having a cobalt/nickel content ratio of 0.03 to 0.13 in the liquid intermediate.

In addition, the present invention provides a method for preparing a high-nickel positive electrode active material, additionally adding at least one selected from the group consisting of nickel sulfate, cobalt sulfate and manganese sulfate after the step of separating the liquid intermediate.

In addition, the present invention provides a method for preparing a high-nickel positive electrode active material, wherein the step of leaching the metal component in the raw material using the acid is performed using a High-Pressure Acid Leaching (HPAL) method.

In addition, the present invention provides a method for preparing a high-nickel positive electrode active material, wherein the content of nickel relative to the total amount of metals other than lithium in the positive electrode active material is 60 atm % or more.

In addition, the present invention provides a method for preparing a high-nickel positive electrode active material that does not comprise the step of reducing the liquid intermediate.

### [Advantageous Effects]

According to the method for preparing a high-nickel positive electrode active material according to the present invention, it is possible to simplify the smelting and liquefaction process, thereby reducing the time and cost required for preparing the positive electrode active material, by leaching a metal component from a raw material containing nickel and cobalt, and then directly introducing the leached metal component into the preparing process of the positive electrode active material precursor without reducing and separating it.

### [Description of Drawings]

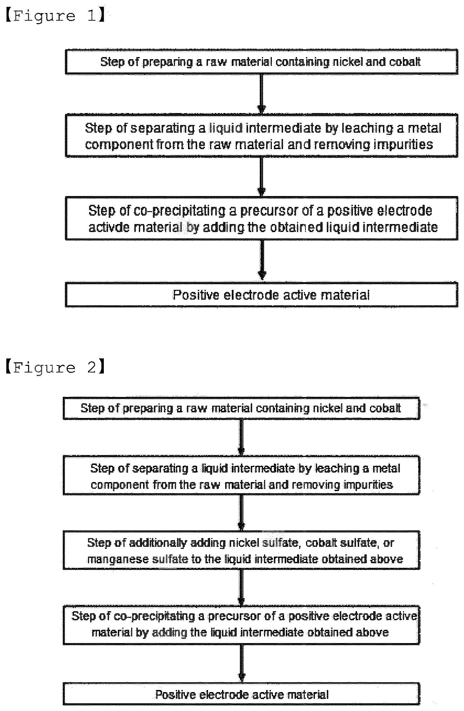

FIG. 1 is a schematic diagram showing the process for preparing the high-nickel positive electrode active material according to the present invention.
FIG. 2 shows the process for preparing a high-nickel positive electrode active material according to the present invention, further comprising the step of additionally adding nickel sulfate, cobalt sulfate or manganese sulfate.

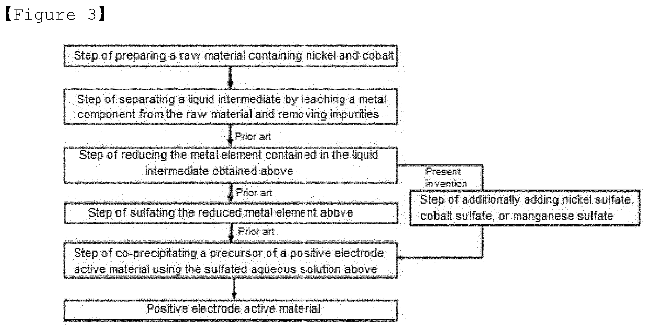

FIG. 3 is a schematic diagram showing a comparison between the preparing process of the high-nickel positive electrode active material according to the present invention and the prior art.
FIG. 4 is a schematic diagram showing a comparison between a conventional process and the process for preparing the positive electrode active material according to the present invention using a nickel oxide ore.
FIG. 5 is a schematic diagram showing a comparison between a conventional process and the process for preparing the positive electrode active material according to the present invention using a nickel sulfide ore.

### [Best Mode]

The embodiments provided according to the present invention can all be achieved by the following description. It is to be understood that the following description is to be understood as describing preferred embodiments of the present invention, and the present invention is not necessarily limited thereto.

The present invention provides a method for preparing a high-nickel positive electrode active material comprising the steps of preparing a raw material containing nickel and cobalt; separating a liquid intermediate by leaching a metal component in the raw material using an acid and removing impurities, wherein the step of leaching the metal component in the raw material using the acid is leaching with sulfuric acid under high temperature and pressure using an autoclave; co-precipitating a precursor of a positive electrode active material by adding a chelating agent and a hydroxide precipitant to the liquid intermediate; and mixing the positive electrode active material precursor with a lithium raw material and sintering to prepare a lithium composite metal oxide,
wherein the lithium composite metal oxide is represented by Formula 1 below:

   [Formula 1] LiₐNi_{b}Co_{c}Mn_{d}MₑO₂
wherein M is at least one selected from the group consisting of W, Cu, Fe, Ba, V, Cr, Ti, Zr, Zn, In, Ta, Y, In, La, Sr, Ga, Sc, Gd, Sm, Ca, Ce, Nb, Mg, B and Mo, and 0.9≤a≤1.5, 0.7≤b<1.0, 0<c<0.2, 0<d<0.2, and 0≤e≤0.02.

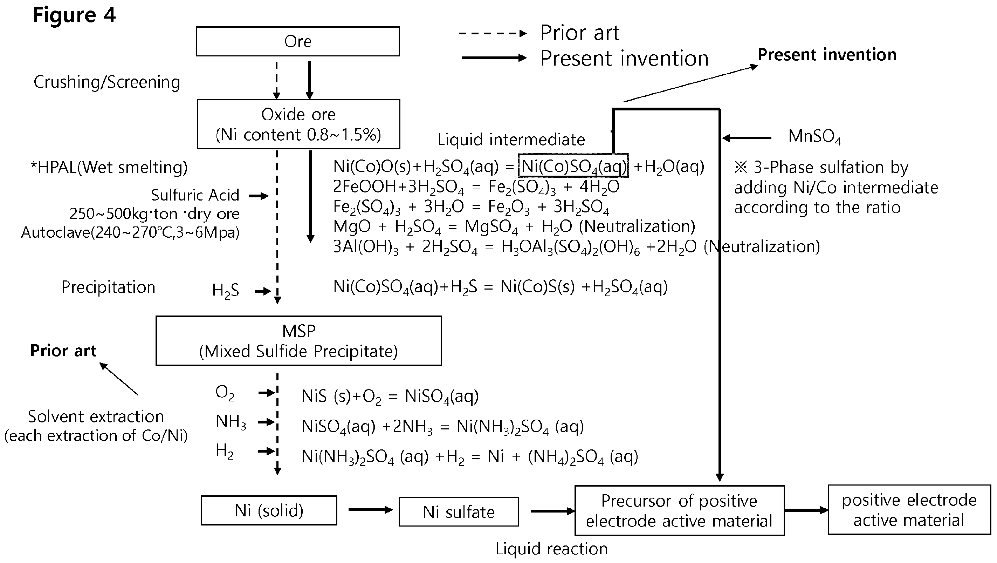

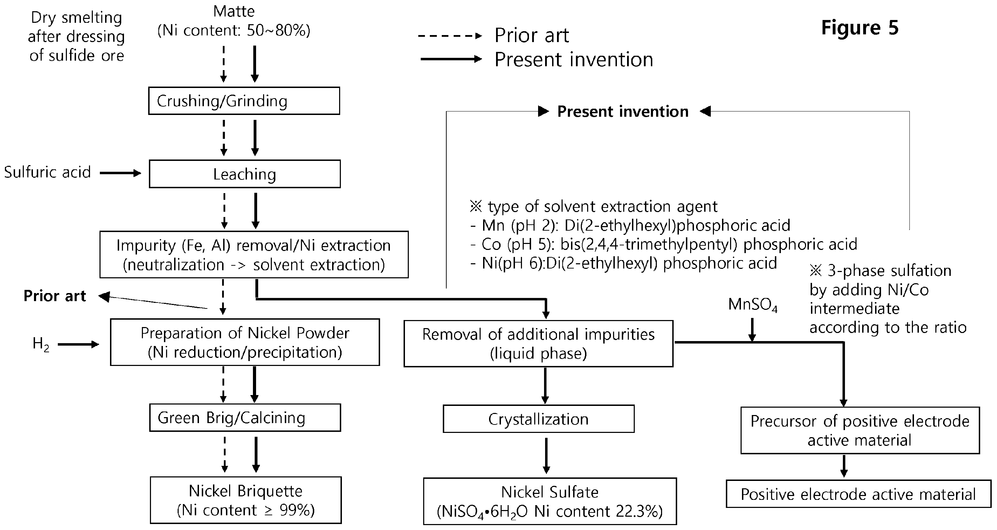

In one embodiment of the present invention, the raw material containing nickel and cobalt may be a nickel oxide ore or nickel sulfide ore. In the preparing method of the high-nickel positive electrode active material of the present invention, the method of manufacturing the high-nickel positive electrode active material using a nickel oxide ore is described in detail in FIG. 4, and the method of manufacturing the high-nickel positive electrode active material using a nickel sulfide ore is described in detail in FIG.5, but the invention is not limited thereto.

The nickel ore as a raw material containing nickel and cobalt is largely divided into a nickel sulfide ore and a nickeliferous laterite ore, which is a nickel oxide ore. The nickel sulfide ore can easily improve nickel quality through physical dressing processes such as multistage-grinding, gravity separation, and flotation, and was used as a raw material to produce 60% of the world's nickel production in 2011. However, due to long-term resource development, as the economically minable nickel sulfide ore is depleting, interest in nickeliferous laterite ore, which accounts for more than 70% of the total nickel reserves, is increasing. The nickeliferous laterite ore, which is a nickel oxide ore, is an oxide ore formed by weathering of rocks by high-temperature and abundant rainfall in the equatorial region. It is divided into wet laterite existing in the tropics and dry laterite distributed in Australia, etc. There are differences in geological structure and ore content depending on the region. These nickeliferous laterite ores have a depth of about 10 to 20 m from the earth's surface, and as the depth is increased, the composition (mineral phase) and physical properties are changed. The limonite is a component of FeO(OH)ₙ·H₂O and consists of a mass, earthy, powder or fibrous form. The saprolite refers to rocks that have been chemically weathered, and mostly has a soft and brittle structure. The saprolite layer is divided into an upper saprolite and a lower saprolite, and the upper saprolite is generally yellow, ocher, orange or yellowish brown in color, and its structure and tissue remain mostly intact. The lower saprolite is generally green in color, but has harder mineral properties than the upper saprolite. The garnierite, which is a main mineral of the saprolite ore, is formed by weathering of serpentine or ultramafic rock. The garnierite has a high nickel content and contains talc, lizardite, and sepiolite rather than a single mineral. Among the nickel oxide ores, the ore currently used industrially is saprolite with a relatively high nickel content, and the saprolite typically contains 1.5-2.5% of nickel and 10-20% of iron. Typically, the nickeliferous laterite ore is in the form of oxides of nickel and cobalt, and may exist as a portion in which a limonite portion with relatively low magnesium content and high iron content and a saprolite portion with relatively high magnesium content and low iron content are arranged in a stacked fashion. Specifically, the limonite may be a mineral component containing 50 to 70% of Fe₋₂O₃ and up to 5% of MgO, and the saprolite may be a mineral component containing 7 to 27% of Fe₂O₃ and up to 10% of MgO.

In the present invention, the step of leaching a metal component from a raw material containing nickel and cobalt is performed by dissolving acid in an autoclave under high-temperature and pressure to recover nickel, cobalt, etc. (High Pressure Acid Leaching: HPAL). Here, the nickel oxide ores, such as the limonite and the saprolite, are in an oxide state and have passive properties, and thus have a high resistance to acid, thereby exhibiting a slow acid dissolution reaction. Therefore, nickel, cobalt, etc. contained in the raw material may be leached by the HPAL method.

Specifically, the leaching of nickel, cobalt, etc. by the HPAL method is preferably performed at a temperature between 230°C and 270°C and a pressure of 40 to 50 bar in an autoclave. The acid used is concentrated sulfuric acid. The reaction time is preferably about 30 to 120 minutes, and the leaching rate by the HPAL method exceeds 90%. It is possible to separate and recover nickel and cobalt by performing leaching with the sulfuric acid, separating the residue by sedimentation, and neutralizing the residual acid in the leaching solution, and then performing various processes.

In one embodiment of the present invention, the removal of impurities from the leaching solution can be repeatedly performed by a conventional method in the technical field to which the present invention belongs, and as an example of such a method, a partial crystallization method, a fractional distillation method, a solvent extraction method, etc. are known, but preferably a solvent extraction method can be used. Looking at this solvent extraction method, an alkali metal compound or alkaline earth metal compound, NaOH, NH3, NH4OH, or an alkali compound, etc. may be used as a neutralizing agent to adjust the pH during solvent extraction.

In addition, the solvent extraction method may use di-2-ethylhexyl phosphoric acid (DEPA) or bis(2,4,4-trimethylpentyl)phosphonic acid (BTMPA). Specifically, in the case of nickel, it can be extracted using di-2-ethylhexyl phosphoric acid (DEPA) under the condition of pH 6, and in the case of cobalt, it can be extracted using BTMPA (bis (2,4,4-trimethylpentyl) phosphonic acid) under the condition of pH 5, and in the case of manganese, it can be extracted using di-2-ethylhexyl phosphoric acid (DEPA) under the condition of pH 2. In the present invention, since an ore is used for preparing, the yield of the finally prepared product can be improved by changing the pH as described above in consideration of the metal content contained in the ore.

In one embodiment of the present invention, the liquid intermediate may contain nickel sulfate, cobalt sulfate and manganese sulfate. The content of nickel in the liquid intermediate may be 35wt.% to 65wt.% based on the total metal, and the content of cobalt may be 1.5wt.% to 7wt.%. In addition, the content ratio of cobalt/nickel in the liquid intermediate may be 0.03 to 0.13. If the content of nickel and cobalt satisfies the above ranges, it is more advantageous to prepare the high-nickel positive electrode active material according to the present invention.

In one embodiment of the present invention, the step of separating the liquid intermediate may include a step of additionally adding at least one selected from the group consisting of nickel sulfate, cobalt sulfate, and manganese sulfate. By incorporating the above process, the concentration can be adjusted to suit the composition to be suitable for preparing the precursor of the high-nickel positive electrode active material according to the present invention.

In one embodiment of the present invention, a precursor of a positive electrode active material may be prepared by co-precipitation reaction by adding a chelating agent and a hydroxide precipitant to the liquid intermediate.

The chelating agent may be a complexing agent containing an ammonium cation, and for example, may be NH₄OH, (NH₄)₂SO₄, NH₄NO₃, NH₄Cl, CH₃COONH₄, NH₄CO₃, or a combination thereof, but is not limited thereto. Meanwhile, the chelating agent may also be used in the form of an aqueous solution. In this case, as the solvent, water or a mixture of water and an organic solvent that can be uniformly mixed with water (specifically, alcohol, etc.) and water may be used.

The hydroxide precipitant may be a hydroxide of an alkali metal or alkaline earth metal such as NaOH, KOH or Ca(OH)₂, a hydrate thereof, or a combination thereof. The hydroxide precipitant may also be used in the form of an aqueous solution. In this case, as the solvent, water or a mixture of water and an organic solvent uniformly miscible with water (specifically, alcohol, etc.) and water may be used. The hydroxide precipitant is added to adjust the pH of the reaction solution, and may be added in an amount such that the pH of the metal solution is 11 to 13.

Meanwhile, the co-precipitation reaction may be performed at a temperature of 40°C to 70°C under an inert atmosphere such as nitrogen or argon.

By the above process, particles of nickel-cobalt-manganese hydroxide are generated and precipitated in the reaction solution. By incorporating the process of additionally adding at least one selected from the group consisting of nickel sulfate, cobalt sulfate and manganese sulfate and thus controlling the concentrations of nickel sulfate, cobalt sulfate, and manganese sulfate, a precursor in which nickel (Ni) is 60at% or more with respect to the total amount of metals other than lithium can be prepared. The precipitated nickel-cobalt-manganese hydroxide particles can be separated according to a conventional method and dried to obtain a precursor of a positive electrode active material.

The method of manufacturing the high-nickel positive electrode active material further comprises a step of preparing a lithium composite metal oxide by mixing a precursor of the positive electrode active material with a lithium raw material and calcinating them. Specifically, the precursor of the positive electrode active material and the lithium raw material may be mixed, and the pre-calcined material may be formed by primarily pre-calcinating in an oxidizing atmosphere. The lithium raw material may comprise lithium-containing sulfate, nitrate, acetate, carbonate, oxalate, citrate, halide, hydroxide or oxyhydroxide, and is not particularly limited as long as it can be dissolved in water. Specifically, the lithium raw material may be Li₂CO₃, LiNO₃, LiNO₂, LiOH, LiOH. H₂O, LiH, LiF, LiCl, LiBr, LiI, CH₃COOLi, Li₂O, Li₂SO₄, CH₃COOLi, or Li₃C₆H₅O₇, and any one or a mixture of two or more thereof may be used.

The primary pre-calcination is performed under an oxidizing atmosphere. In this case, the oxidizing atmosphere may mean performing the calcination while supplying oxygen. The primary pre-calcination may be performed while supplying oxygen at a rate of 10 m²/min to 600 m²/min, and more preferably, oxygen may be supplied at a rate of 200 m²/min to 400 m²/min.

The calcination temperature of the primary pre-calcination may be 400°C to 700°C, more preferably 450°C to 650°C, and still more preferably 500°C to 600°C. By performing the primary pre-calcination within the calcination temperature range described above, lithium and the precursor react to produce a pre-calcined material having a layered structure and a spinel-like structure more rapidly, which may have an effect of reducing oxygen consumption.

The primary pre-calcination may be performed for 3 hours to 7 hours, and more preferably for 4 hours to 6 hours, after reaching the target calcination temperature. By performing the primary pre-calcination within the calcination time range, and thus effectively improving the structural stability of the finally produced positive electrode active material, reducing the moisture content, and inducing a uniform reaction, it is possible to produce a positive electrode active material with less dispersion and uniform performance, and it is possible to improve production efficiency by consuming only as much oxygen as is necessary to improve performance. As described above, the pre-calcined material formed through the primary pre-calcination may have a structure including a layered structure and a spinel-like structure. Since the pre-calcination material has a structure including a layered structure and a spinel-like structure, there is no need to maintain an oxidizing atmosphere thereafter because sufficient oxygen is contained in the structure. Accordingly, in the subsequent secondary main calcination, since it is possible to reduce the oxygen consumption by stopping the supply of oxygen, as well as to prevent a decrease in the internal temperature of the kiln due to the input of oxygen, even if the calcination is performed at the same calcination temperature, a positive electrode active material with better crystallinity and uniformity can be prepared.

Next, the pre-calcination material is subjected to secondary main calcination in an air atmosphere to form a lithium transition metal oxide.

As mentioned above, the secondary main calcination may be performed under an air atmosphere without maintaining the oxidizing atmosphere in the primary pre-calcination, that is, after stopping the supply of oxygen in the primary pre-calcination. Since the pre-calcination product formed in the primary pre-calcination has a structure comprising a layered structure and a spinel-like structure, there is no need to continuously supply oxygen in the secondary main calcination, but rather, it prevents the temperature drop due to the input of oxygen to help the uniform reaction between the precursor of the positive electrode active material and the lithium raw material source, and it is possible to prepare a positive electrode active material of lithium transition metal oxide with excellent crystallinity and improved structural stability. In addition, since oxygen is supplied only in the primary pre-calcination, the oxygen consumption can be significantly reduced, thereby reducing manufacturing costs, compared to the previous preparing process in which the entire calcination process was performed in an oxidizing atmosphere.

The calcination temperature of the secondary main calcination may be 700°C to 1,000°C, more preferably 725°C to 900°C, and even more preferably 750°C to 800°C. By secondary main calcination within the firing temperature range, there may be an effect of synthesizing an electrochemically excellent positive electrode active material with little cation disorder structurally.

The secondary main calcination may be performed for 4 to 15 hours, and more preferably for 5 to 10 hours, after reaching the target calcination temperature.

The lithium transition metal oxide thus formed is represented by Formula 1 below:

[Formula 1] LiₐNi_{b}Co_{c}Mn_{d}MₑO₂

In Formula 1, M is at least one selected from the group consisting of W, Cu, Fe, Ba, V, Cr, Ti, Zr, Zn, In, Ta, Y, In, La, Sr, Ga, Sc, Gd, Sm, Ca, Ce, Nb, Mg, B and Mo, and 0.9≤a≤1.5, 0.7≤b<1.0, 0<c<0.2, 0<d<0.2, 0≤e≤0.02.

In the lithium transition metal oxide of Formula 1, Li is contained in an amount corresponding to a, that is, 0.9≤a≤1.5. If a is less than 0.9, there is a concern that the capacity may be decreased. If a exceeds 1.5, the strength of the calcined positive electrode active material is increased, making it difficult to pulverize, and there may be an increase in the amount of gas generated due to an increase in the Li by-product. Considering the effect of improving the capacitance characteristics of the positive electrode active material depending on the control of the Li content and the calcination balance during the production of the active material, Li may be more preferably contained in a content of 1.0≤a≤1.1.

In addition, in the lithium transition metal oxide of Formula 1, Ni is contained in an amount corresponding to b, that is, 0.7≤b<1.0. If the content of Ni in the lithium transition metal oxide of Formula 1 is 0.7 or more, the amount of Ni sufficient to contribute to charging/discharging is secured, thereby further increasing the capacity.

In the lithium transition metal oxide of Formula 1, Co is contained in an amount corresponding to c, that is, 0<c<0.2. If the content of Co in the lithium transition metal oxide of Formula 1 is 0.2 or more, there is a concern of an increase in cost.

In the lithium transition metal oxide of Formula 1, Mn is contained in an amount corresponding to d, that is, 0<d<0.2. Mn can improve the stability of the positive electrode active material and, as a result, improve the stability of the battery.

In the lithium transition metal oxide of Formula 1, M may be a doping element contained in the crystal structure of the lithium transition metal oxide, and M is contained in a content corresponding to e, that is, 0≤e≤0.02.

In one embodiment of the present invention, the content of nickel relative to the total amount of metals other than lithium in the positive electrode active material may be 75 at% or more, and more preferably 80 at%. If the content of nickel in the positive electrode active material is satisfied, a secondary battery that is structurally stable, has excellent capacity characteristics even during repeated charging, and has a small rate of increase in resistance can be implemented.

In one embodiment of the present invention, the preparation method of the high-nickel positive electrode active material may not comprise the step of reducing and precipitating the liquid intermediate. That is, by reducing and precipitating the liquid intermediate, it is possible to prepare a positive electrode active material in a state in which nickel, cobalt, or manganese are not separately separated into pure metals. Due to this, the process of refining nickel and cobalt, which are difficult to separate in the final step, is not required, and thus the smelting and liquefaction process can be simplified, thereby reducing the time and cost required for preparing the high-nickel positive electrode active material.

In addition, when using the positive electrode active material of the high-nickel lithium transition metal oxide prepared according to the preparation method of the present invention, the initial resistance of the lithium secondary battery can be reduced, the high-temperature lifetime characteristics can be improved, and the resistance increase can be suppressed.

### Positive electrode and secondary battery

The high-nickel positive electrode active material prepared by the preparation method of the present invention can be usefully used for manufacturing a positive electrode for a secondary battery.

Specifically, the positive electrode for a secondary battery according to the present invention comprises a positive electrode current collector and a positive electrode active material layer formed on the positive electrode current collector, and in this case, the positive electrode active material layer comprises the positive electrode active material according to the present invention.

The positive electrode may be manufactured according to a conventional manufacturing method of the positive electrode except for using the positive electrode active material according to the present invention. For example, the positive electrode may be manufactured by dissolving or dispersing the components constituting the positive electrode active material layer, that is, a positive electrode active material, an electrically conductive material and/or a binder, etc. in a solvent to prepare a positive electrode mixture, applying the positive electrode mixture to at least one surface of the positive electrode current collector, and then drying and rolling it, or may be manufactured by casting the positive electrode mixture on a separate support and then laminating a film obtained by peeling it off the support on a positive electrode current collector.

At this time, the positive electrode current collector is not particularly limited as long as it has electrical conductivity without causing a chemical change in the battery, and for example, stainless steel, aluminum, nickel, titanium, sintered carbon, or aluminum, or stainless steel surface-treated with carbon, nickel, titanium, silver or the like may be used. In addition, the positive electrode current collector may typically have a thickness of 3 µm to 500 µm, and may increase the adhesive force with the positive electrode active material by forming fine irregularities on the surface of the current collector. For example, the positive electrode current collector may be formed in various forms such as film, sheet, foil, net, porous body, foam, or nonwoven fabric.

A positive electrode active material layer comprising the positive electrode active material according to the present invention, and optionally further comprising at least one of an electrically conductive material and a binder, if necessary, is positioned on at least one surface of the current collector.

The positive electrode active material comprises the positive electrode active material according to the present invention, that is, the lithium composite metal oxide represented by Formula 1. Since the specific content of the positive electrode active material according to the present invention is the same as described above, a detailed description thereof will be omitted.

The positive electrode active material may be contained in an amount of 80 to 99 wt.%, more specifically 85 to 98 wt.%, based on the total weight of the positive electrode active material layer. When the positive electrode active material is contained in the above-described content range, it may exhibit excellent capacity characteristics.

The electrically conductive material is used for imparting conductivity to the electrode, and can be used without any particular limitation as long as it has electronic conductivity without causing chemical change in the constituted battery. Specific examples thereof may comprise graphite such as natural graphite or artificial graphite; carbon-based materials such as carbon black, acetylene black, Ketjen black, channel black, furnace black, lamp black, thermal black and carbon fiber; metal powders or metal fibers such as copper, nickel, aluminum, and silver; electrically conductive whiskers such as zinc oxide and potassium titanate; electrically conductive metal oxides such as titanium oxide; or electrically conductive materials such as polyphenylene derivatives, and one of these or a mixture of two or more thereof may be used. The electrically conductive material may be contained in an amount of 1 wt.% to 30 wt.% based on the total weight of the positive electrode active material layer.

In addition, the binder serves to improve the adhesion between the positive electrode active material particles and the adhesive force between the positive electrode active material and the current collector. Specific examples thereof may comprise polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated-EPDM, styrenebutadiene rubber(SBR), fluorine rubber, or various copolymers thereof, and one of these or a mixture of two or more thereof may be used. The binder may be contained in an amount of 1 wt.% to 30 wt.% based on the total weight of the positive electrode active material layer.

Meanwhile, the solvent used for preparing the positive electrode mixture may be a solvent generally used in the art, for example, dimethyl sulfoxide (DMSO), isopropyl alcohol, N-methyl pyrrolidone (NMP), acetone or water, etc. can be used individually or in mixture of these. The amount of the solvent used may be appropriately adjusted in consideration of the application thickness of the slurry, the production yield, the viscosity, and the like.

Next, the secondary battery according to the present invention will be described.

The secondary battery according to the present invention comprises a positive electrode, a negative electrode positioned to face the positive electrode, a separator and an electrolyte interposed between the positive electrode and the negative electrode, wherein the positive electrode is the positive electrode according to the present invention described above.

Meanwhile, the secondary battery may optionally further include a battery container accommodating the electrode assembly of the positive electrode, the negative electrode and the separator, and a sealing member sealing the battery container.

In the secondary battery, the negative electrode comprises a negative electrode current collector and a negative electrode active material layer positioned on at least one surface of the negative electrode current collector.

The negative electrode may be manufactured according to a conventional method of manufacturing a negative electrode generally known in the art. For example, the negative electrode may be manufactured by dissolving or dispersing the components constituting the negative electrode active material layer, that is, a negative electrode active material, an electrically conductive material and/or a binder, etc. in a solvent to prepare a negative electrode mixture, applying the positive electrode mixture to at least one surface of the negative electrode current collector, and then drying and rolling it, or may be manufactured by casting the negative electrode mixture on a separate support and then laminating a film obtained by peeling it off the support on a negative electrode current collector.

The negative electrode current collector is not particularly limited as long as it has electrical conductivity without causing a chemical change in the battery, and for example, copper, stainless steel, aluminum, nickel, titanium, sintered carbon, or copper or stainless steel surface-treated with carbon, nickel, titanium, silver or the like, aluminum-cadmium alloy may be used. In addition, the negative electrode current collector may typically have a thickness of 3 µm to 500 µm, and may increase the adhesive force with the positive electrode active material by forming fine irregularities on the surface of the current collector, as with the positive electrode current collector. For example, the negative electrode current collector may be formed in various forms such as film, sheet, foil, net, porous body, foam, or nonwoven fabric.

As the negative electrode active material, a compound capable of reversible intercalation and deintercalation of lithium may be used. Specific examples thereof may comprise carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiOv (0<v<2), SnO2, vanadium oxide, and lithium vanadium oxide; or composites comprising the metallic compound and carbonaceous material such as Si-C composite or Sn-C composite, and one of these or a mixture of two or more thereof may be used. In addition, a metallic lithium thin film may be used as the negative electrode active material. In addition, as the carbon material, both low crystalline carbon and high crystalline carbon may be used. The low crystalline carbon is typically soft carbon and hard carbon, and the high crystalline carbon is typically amorphous, plate-like, flaky, spherical or fibrous natural or artificial graphite, Kish graphite, pyrolytic carbon, mesophase pitch-based carbon fiber, meso-carbon microbeads, Mesophase pitches and high-temperature calcined carbon such as petroleum or coal tar pitch derived cokes.

In addition, the binder and the electrically conductive material may be the same as those described above for the positive electrode.

Meanwhile, the separator separates the negative and positive electrodes and provides a path for lithium ions to move, and may be used without particular limitation as long as it is used as a separator in a typical lithium-sulfur battery. In particular, it is preferable that the separator has excellent impregnating ability for the electrolyte along with low resistance to ion migration in the electrolyte. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used. In addition, a conventional porous nonwoven fabric, for example, a nonwoven fabric made of high melting point glass fiber, polyethylene terephthalate fiber, etc. may be used. In addition, a coated separator containing a ceramic component or a polymer material may be used to secure heat resistance or mechanical strength, and may optionally be used in a single-layer or multi-layer structure.

Meanwhile, the electrolyte may comprise, but is not limited to, an organic liquid electrolyte, an inorganic liquid electrolyte, a solid polymer electrolyte, a gel-type polymer electrolyte, a solid inorganic electrolyte, a molten inorganic electrolyte, etc. that can be used in the manufacture of a secondary battery.

Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol and isopropyl alcohol; nitriles such as Ra-CN (Ra is a linear, branched, or cyclic hydrocarbon group having 2 to 20 carbon atoms, and may include a double bond aromatic ring or an ether bond); amides such as dimethylformamide; dioxolanes such as 1,3-dioxolane; or sulfolanes. Among them, the carbonate-based solvents are preferable, and a mixture of cyclic carbonates having high ionic conductivity and high dielectric constant (for example, ethylene carbonate or propylene carbonate, etc.), which can increase charging/discharging performance of a battery, and low-viscosity linear carbonate-based compounds (for example, ethyl methyl carbonate, dimethyl carbonate, diethyl carbonate, etc.) is more preferable. In this case, when the cyclic carbonate and the chain-type carbonate are mixed in a volume ratio of about 1:1 to 1:9, the electrolyte solution may exhibit excellent performance.

The lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, etc. The concentration of the lithium salt is preferably used within the range of 0.1M to 2.0M. If the concentration of the lithium salt is included in the above range, since the electrolyte has appropriate conductivity and viscosity, excellent electrolyte performance may appear, and lithium ions may move effectively.

For the purpose of improving the lifetime characteristics of the battery, suppressing the reduction of the battery capacity, and improving the discharging capacity of the battery, the electrolyte may comprise one or more additives of for example, haloalkylene carbonate-based compounds such as difluoroethylene carbonate and the like; or pyridine, triethylphosphite, triethanolamine, cyclic ether, ethylene diamine, n-glyme, hexaphosphoric triamide, nitrobenzene derivatives, sulfur, quinoneimine dyes, N-substituted oxazolidinone, N, N-substituted imidazolidine, ethylene glycol dialkyl ether, ammonium salt, pyrrole, 2-methoxy ethanol, or aluminum trichloride, etc., in addition to the electrolyte components. At this time, the additive may be contained in an amount of 0.1 wt.% to 5 wt.% based on the total weight of the electrolyte.

As described above, the secondary battery comprising the positive electrode active material according to the present invention has excellent capacity characteristics and high-temperature stability, and thus can be usefully applied to fields of portable devices such as mobile phones, notebook computers, digital cameras, and electric vehicles such as hybrid electric vehicle (HEV).

In addition, the secondary battery according to the present invention may be used as a unit cell of a battery module, and the battery module may be applied to a battery pack. The battery module or the battery pack may be used as a power source for any one or more medium and large-sized devices of a power tool; an electric vehicle including an electric vehicle (EV), a hybrid electric vehicle, and a plug-in hybrid electric vehicle (PHEV); or a power storage system.

Hereinafter, preferred Examples are presented to help the understanding of the present invention.

### Example

### Preparation of positive electrode active material

### [Example 1]

### (1) Preparation of liquid intermediate

### - Step of separating the liquid intermediate by leaching metal components in the raw material using acid and removing impurities

A nickeliferous laterite ore was pressure-leached with sulfuric acid in an autoclave (High Pressure Acid Leaching: HPAL) method. At this time, the temperature was 250°C, and the pressure was 4.46 MPa. Sulfuric acid was added at 350 kg/ton based on dry ore. Then, the residue was separated by sedimentation, and the residual acid in the leaching solution was neutralized. The above process was repeated 5 times. At this time, the reaction is as shown by Reaction Scheme below.

Ni(Co)O(s) + H₂SO₄(aq) = Ni(Co)SO₄(aq) + H₂O(l)

2FeOOH + 3H₂SO₄ = Fe₂(SO₄)₃+4H₂O

Fe₂(SO₄)₃ + 3H₂O = Fe₂O₃ + 3H₂SO₄

MgO + H₂SO₄ = MgSO₄ + H₂O

3Al(OH)₃ + 2H₂SO₄ = H₂OAl₃(SO₄)₂(OH)₆ + 2H₂O

As described above, the liquid intermediate obtained after leaching the metal component using acid and removing impurities contains 10.3 mol% of nickel sulfate, 0.9 mol% of cobalt sulfate, and 1.7 mol% of manganese sulfate (cobalt/nickel content ratio = 0.087), and the specific composition of the liquid intermediate is shown in Table 1 below.

The content is expressed based on 100% of the total weight, and the remainder consists of other unavoidable impurities.

**Table 1:**

| Composition | Content (wt.%) |
|---|---|
| Ni | 38 |
| Co | 3.5 |
| Fe | 0.2 |
| Mg | 1.4 |
| Mn | 6 |
| Cu | 0.1 |
| Zn | 0.9 |
| Cr | 0.2 |
| Al | 0.13 |

### (2) Step of co-precipitating precursor of positive electrode active material

316 kg of nickel sulfate and 77 kg of cobalt sulfate were additionally added to 1 ton of the liquid intermediate obtained above.

Thereafter, as described above, the liquid intermediate to which nickel sulfate, cobalt sulfate, and manganese sulfate were additionally added was adjusted to pH 11.0 by adding sodium hydroxide (NaOH) solution, and then charged into a 5L reactor at 0.32 L/hr, which was initialized with nitrogen gas at 1 L/min, the reactor temperature at 40°C, and the stirring speed at 1000 RPM. Thereafter, an ammonia solution (NH4OH, chelating agent) with a concentration of 6M was continuously added to the reactor at 0.032L/hr, and sodium hydroxide (NaOH) with a concentration of 3M was additionally added to adjust the pH to 11. The average residence time of the solution was set to 6 hours, and nickel-cobalt-manganese composite hydroxide was continuously obtained. The nickel-cobalt-manganese composite hydroxide thus obtained was filtered, and then dried at 130°C for 24 hours to be used as a precursor before heat treatment.

The precursor and lithium hydroxide (LiOH.H2O) were put into a high-density polyethylene (HDPE) bottle container at a molar ratio of 1:1.4, and the zirconia balls were put so that the ratio of the zirconia balls to the input material was 5:1, and then solid-mixed at 100 rpm for 10 hours through the ball miller. The solid-mixed raw material thus obtained was separated from the zirconia balls, and then put in a heating furnace, raised to 750°C at a temperature increase rate of 1.25°C/min, and calcined at 750°C for 10 hours in an oxygen atmosphere to prepare a lithium composite metal oxide. The lithium composite metal oxide is represented by LiNi_{0.8}Co_{0.1}Mn_{0.1}O₂. The lithium composite metal oxide thus prepared and ethanol were placed in a 1L reactor at a weight ratio of 1:10 and rotated for 1 hour at an impeller rotation speed of 1000 rpm through a motor to remove residual lithium, vacuum-filtered, and then vacuum-dried at 130°C for 10 hours to prepare a positive electrode active material.

The content of the nickel element relative to the total amount of metals other than lithium in the positive electrode active material was 80 at%.

### [Comparative Example 1]

Nickel, cobalt, and manganese were smelted by a conventional method, and then, using them, nickel sulfate (NiSO₄), cobalt sulfate (CoS_{O4}), and manganese sulfate (MnSO₄) were prepared, and the molar ratio of nickel sulfate (NiSO4), cobalt sulfate (CoSO4), and manganese sulfate (MnSO4) was set to be the same as that of the liquid intermediate in Example 1 to prepare a metal solution.

Specifically, the leaching solution obtained in step (1) is treated with an excess of hydrogen sulfide (HS) to obtain nickel sulfide (NiS), cobalt sulfide (CoS) and manganese sulfide (MnS), and then nickel (Ni), cobalt (Co), and manganese (Mn) are extracted (reduced) from the nickel sulfide (NiS), cobalt sulfide (CoS), and manganese sulfide (MnS), and then sulfated again to produce nickel sulfate (NiSO₄), cobalt sulfate (CoSO₄), manganese sulfate(MnSO₄), and then the molar ratio thereof was set to be the same as that in the liquid intermediate in Example 1 above to prepare a metal solution.

Thereafter, using the metal solution, a positive electrode active material was prepared in the same manner as in (2) co-precipitating the precursor of the positive electrode active material.

The content of the nickel element relative to the total amount of metal other than lithium in the positive electrode active material was 80 at%, which was the same as in Example 1.

Through the above results, it can be seen that in the case of the manufacturing method of the present invention, even though the smelting and liquefaction process is simplified, it exhibits an effect equal to or greater than that of the conventional preparation method, thereby reducing the time and cost required for preparing a positive electrode active material.

## Claims

1. A method for preparing a high-nickel positive electrode active material comprising the steps of,
preparing a raw material containing nickel and cobalt;
separating a liquid intermediate by leaching a metal component in the raw material using an acid and removing impurities, wherein the step of leaching the metal component in the raw material using the acid is leaching with sulfuric acid under high temperature and pressure using an autoclave;
co-precipitating a precursor of a positive electrode active material by adding a chelating agent and a hydroxide precipitant to the separated liquid intermediate; and
mixing the positive electrode active material precursor with a lithium raw material and sintering to prepare a lithium composite metal oxide,
wherein the lithium composite metal oxide is represented by Formula 1 below:
[Formula 1] LiₐNi_{b}Co_{c}Mn_{d}MₑO₂
wherein M is at least one selected from the group consisting of W, Cu, Fe, Ba, V, Cr, Ti, Zr, Zn, In, Ta, Y, In, La, Sr, Ga, Sc, Gd, Sm, Ca, Ce, Nb, Mg, B and Mo, and 0.9≤a≤1.5, 0.7≤b<1.0, 0<c<0.2, 0<d<0.2, and 0≤e≤0.02.

2. The method for preparing the high-nickel positive electrode active material according to claim 1, wherein the raw material containing nickel and cobalt is a nickel oxide ore or nickel sulfide ore.

3. The method for preparing the high-nickel positive electrode active material according to claim 1, wherein the liquid intermediate contains nickel sulfate, cobalt sulfate and manganese sulfate.

4. The method for preparing the high-nickel positive electrode active material according to claim 1, wherein the liquid intermediate is a liquid intermediate having a nickel content of 35 wt.% to 65 wt.% and a cobalt content of 1.5 wt.% to 7 wt.%.

5. The method for preparing the high-nickel positive electrode active material according to claim 1, wherein the content ratio of cobalt/nickel in the liquid intermediate is 0.03 to 0.13.

6. The method for preparing the high-nickel positive electrode active material according to claim 1, wherein after step of separating the liquid intermediate, at least one selected from the group consisting of nickel sulfate, cobalt sulfate, and manganese sulfate is additionally added.

7. The method for preparing the high-nickel positive electrode active material according to claim 1, wherein the step of leaching the metal component in the raw material using the acid uses a High-Pressure Acid Leaching (HPAL) method.

8. The method for preparing the high-nickel positive electrode active material according to claim 1, wherein the positive electrode active material has a nickel content of 60 at% or more with respect to the total amount of metals other than lithium.

9. The method for preparing the high-nickel positive electrode active material according to claim 1, wherein the method does not comprise a process of reducing the liquid intermediate.

## Patentansprüche

1. Verfahren zur Herstellung eines Positivelektroden-Aktivmaterials mit hohem Nickelgehalt, umfassend die Schritte
Vorbereiten eines Ausgangsmaterials, das Nickel und Kobalt enthält;
Abtrennen eines flüssigen Intermediats durch Auswaschen einer Metallkomponente in dem Ausgangsmaterial unter Verwendung einer Säure und Entfernen von Verunreinigungen, worin der Schritt zum Auswaschen der Metallkomponente in dem Ausgangsmaterial unter Verwendung der Säure ein Auswaschen mit Schwefelsäure bei hoher Temperatur und Druck unter Einsatz eines Autoklavs ist;
Co-Ausfällen eines Vorläufers eines Positivelektroden-Aktivmaterials durch Zugeben eines Chelatbildners und eines Hydroxid-Ausfällungsmittels zu dem abgetrennten flüssigen Intermediat; und
Mischen des Positivelektroden-Aktivmaterialvorläufers mit einem Lithium- Ausgangsmaterial und Sintern, um ein Lithium-Kompositmetalloxid herzustellen,
worin das Lithium-Kompositmetalloxid durch die nachstehende Formel 1 dargestellt ist:
[Formel 1] LiₐNi_{b}Co_{c}Mn_{d}MₑO₂
worin M zumindest eines ist, ausgewählt aus der Gruppe bestehend aus W, Cu, Fe, Ba, V, Cr, Ti, Zr, Zn, In, Ta, Y, In, La, Sr, Ga, Sc, Gd, Sm, Ca, Ce, Nb, Mg, B und Mo, und 0,9≤a≤1,5, 0,7≤b<1,0, 0<c<0,2, 0<d<0,2 und 0≤e≤0,02.

2. Verfahren zur Herstellung eines Positivelektroden-Aktivmaterials mit hohem Nickelgehalt gemäß Anspruch 1, worin das Ausgangsmaterial, das Nickel und Kobalt enthält, ein Nickeloxiderz oder ein Nickelsulfiderz ist.

3. Verfahren zur Herstellung eines Positivelektroden-Aktivmaterials mit hohem Nickelgehalt gemäß Anspruch 1, worin das flüssige Intermediat Nickelsulfat, Kobaltsulfat und Mangansulfat enthält.

4. Verfahren zur Herstellung eines Positivelektroden-Aktivmaterials mit hohem Nickelgehalt gemäß Anspruch 1, worin das flüssige Intermediat ein flüssiges Intermediat mit einem Nickelgehalt von 35 Gew.-% bis 65 Gew.-% und einen Kobaltgehalt von 1,5 Gew.-% bis 7 Gew.-% ist.

5. Verfahren zur Herstellung eines Positivelektroden-Aktivmaterials mit hohem Nickelgehalt gemäß Anspruch 1, worin das Mengenverhältnis Kobalt/Nickel in dem flüssigen Intermediat 0,03 bis 0,13 beträgt.

6. Verfahren zur Herstellung eines Positivelektroden-Aktivmaterials mit hohem Nickelgehalt gemäß Anspruch 1, worin nach dem Schritt zum Abtrennen des flüssigen Intermediats zusätzlich zumindest eines, das ausgewählt ist aus der Gruppe bestehend aus Nickelsulfat, Kobaltsulfat und Mangansulfat, zugegeben wird.

7. Verfahren zur Herstellung eines Positivelektroden-Aktivmaterials mit hohem Nickelgehalt gemäß Anspruch 1, worin im Schritt zum Auswaschen der Metallkomponente in dem Ausgangsmaterial unter Verwendung der Säure ein High-Pressure-Acid-Leaching (HPAL)-Verfahren eingesetzt wird.

8. Verfahren zur Herstellung eines Positivelektroden-Aktivmaterials mit hohem Nickelgehalt gemäß Anspruch 1, worin das Positivelektroden-Aktivmaterial einen Nickelgehalt von 60 At.-% oder mehr aufweist, bezogen auf die Gesamtmenge der Metalle außer Lithium.

9. Verfahren zur Herstellung eines Positivelektroden-Aktivmaterials mit hohem Nickelgehalt gemäß Anspruch 1, worin das Verfahren keinen Prozess zum Reduzieren des flüssigen Intermediats umfasst.

## Revendications

1. Procédé de préparation d'un matériau actif d'électrode positive à haute teneur en nickel comprenant les étapes consistant à
préparer une matière première contenant du nickel et du cobalt ;
séparer un intermédiaire liquide en lixiviant un composant métallique dans la matière première en utilisant un acide et en éliminant des impuretés, dans lequel l'étape consistant à lixivier le composant métallique dans la matière première en utilisant l'acide est une lixiviation avec de l'acide sulfurique à une température et une pression élevées en utilisant un autoclave ;
co-précipiter un précurseur d'un matériau actif d'électrode positive en ajoutant un agent de chélation et un précipitant d'hydroxyde à l'intermédiaire liquide séparé ; et
mélanger le précurseur de matériau actif d'électrode positive avec une matière première au lithium et fritter de manière à préparer un oxyde de métal composite au lithium,
dans lequel l'oxyde de métal composite au lithium est représenté par la Formule 1 ci-dessous :
[Formule 1] LiₐNi_{b}Co_{c}Mn_{d}MₑO₂
dans laquelle M est au moins un élément sélectionné à partir du groupe constitué de W, Cu, Fe, Ba, V, Cr, Ti, Zr, Zn, In, Ta, Y, In, La, Sr, Ga, Sc, Gd, Sm, Ca, Ce, Nb, Mg, B et Mo et 0,9 ≤ a ≤ 1,5, 0,7 ≤ b ≤ 1,0, 0 < c < 0,2, 0 < d < 0,2 et 0 ≤ e ≤ 0,02.

2. Procédé de préparation du matériau actif d'électrode positive à haute teneur en nickel selon la revendication 1, dans lequel la matière première contenant du nickel et du cobalt est un minerai d'oxyde de nickel ou un minerai de sulfure de nickel.

3. Procédé de préparation du matériau actif d'électrode positive à haute teneur en nickel selon la revendication 1, dans lequel l'intermédiaire liquide contient du sulfate de nickel, du sulfate de cobalt et du sulfate de manganèse.

4. Procédé de préparation du matériau actif d'électrode positive à haute teneur en nickel selon la revendication 1, dans lequel l'intermédiaire liquide est un intermédiaire liquide présentant une teneur en nickel de 35 % en poids à 65 % en poids et une teneur en cobalt de 1,5 % en poids à 7 % en poids.

5. Procédé de préparation du matériau actif d'électrode positive à haute teneur en nickel selon la revendication 1, dans lequel le rapport de teneur du cobalt/nickel dans l'intermédiaire liquide va de 0,03 à 0,13.

6. Procédé de préparation du matériau actif d'électrode positive à haute teneur en nickel selon la revendication 1, dans lequel, après l'étape consistant à séparer l'intermédiaire liquide, au moins un membre, sélectionné, dans le groupe constitué par le sulfate de nickel, le sulfate de cobalt et le sulfate de manganèse est en outre ajouté.

7. Procédé de préparation du matériau actif d'électrode positive à haute teneur en nickel selon la revendication 1, dans lequel l'étape consistant à lixivier le composant métallique dans la matière première en utilisant de l'acide utilise un procédé de lixiviation acide à haute pression (HPAL).

8. Procédé de préparation du matériau actif d'électrode positive à haute teneur en nickel selon la revendication 1, dans lequel le matériau actif d'électrode positive présente une teneur en nickel de 60 % at ou plus par rapport à la quantité totale de métaux autres que le lithium.

9. Procédé de préparation du matériau actif d'électrode positive à haute teneur en nickel selon la revendication 1, dans lequel le procédé ne comprend pas de processus de réduction de l'intermédiaire liquide.
